# NOUVEAU FASCICULE DE BREVET EUROPEEN

(11) **EP 0 242 254 B2**
(45) Date de publication et mention de la décision concernant l'opposition: **08.12.1993**
(45) Mention de la délivrance du brevet: 27.12.1989
(21) Numéro de dépôt: 87400619.0
(22) Date de dépôt: 19.03.1987
(51) Int. Cl.: F16F 13/00

(54) **Perfectionnements aux manchons de support antivibratoires hydrauliques**
Hydraulisch gedämpftes Lagerelement
Hydraulic vibration damper mounting device

(30) Priorité: 19.03.1986 FR 8603915
(43) Date de publication de la demande: 21.10.1987
(73) Titulaire: HUTCHINSON, F-75008 Paris (FR)
(72) Inventeur: Domer, Michel, F-60790 Valdampierre (FR); Dubos, Daniel, F-92600 Asnieres (FR)
(74) Mandataire: Behaghel, Pierre

(56) Documents cités:
- EP-A- 0 172 700
- DE-C- 3 050 710
- FR-A- 2 542 404
- FR-A- 2 551 161
- GB-A- 1 545 843
- JP-A- 619 318
- US-A- 3 698 703

## Description

### Perfectionnements aux manchons de support antivibratoires hydrauliques.

L'invention concerne les manchons de support antivibratoires hydrauliques comprenant deux armatures rigides tubulaires s'entourant l'une l'autre et de préférence de révolution, coaxiales et concentriques au moins sous charge, armatures réunies entre elles par un corps en élastomère adhéré sur celles-ci et conformé de façon à former au moins deux poches étanches entre les deux armatures, ces poches communiquant entre elles par un passage étranglé et étant remplies de liquide ainsi que ledit passage.

De tels manchons sont destinés à être montés entre deux pièces rigides solidarisables respectivement avec les deux armatures et susceptibles de subir l'une par rapport à l'autre des oscillations orientées selon une direction diamétrale D par rapport à l'axe commun aux deux armatures, l'ensemble étant agencé de façon telle que, pour certaines au moins de ces oscillations, le liquide soit refoulé alternativement de l'une des poches vers l'autre et inversement à travers le passage étranglé, ce qui crée dans ce liquide un phénomène de résonance propre à amortir la transmission des oscillations de l'une des armatures à l'autre.

Les manchons du genre en question sont par exemple destinés à être interposés entre, d'une part un châssis de véhicule et, d'autre part, le moteur à combustion interne ou le train avant ou arrière de ce véhicule.

Pour limiter l'amplitude des déformations du corps élastique réunissant les deux armatures d'un tel manchon, lors de l'exercice de fortes sollicitations selon la direction D sur l'une de ces armatures par rapport à l'autre, il a déjà été proposé de faire comprendre respectivement à ces deux armatures deux portées propres à s'appliquer ou buter l'une contre l'autre selon ladite direction D.

Dans les modes de réalisation connus des manchons ainsi définis, voir les documents FR-A-2 551 161 et FR-A-2 542 404, les portées en question délimitent respectivement deux portions distinctes d'une même poche.

Ces modes de réalisation présentent l'inconvénient suivant : lors des fortes sollicitations mentionnées ci-dessus, en raison de la présence des portées de butée à l'intérieur des poches hydrauliques, le passage étranglé risque d'être obturé par ces portées elles-mêmes et d'autres passages étranglés risquent d'être formés involontairement dans lesdites poches par lesdites portées.

L'invention a pour but, surtout, de remédier à cet inconvénient et, dans les modes de réalisation préférés, de rendre les manchons considérés tels qu'ils assurent le filtrage de vibrations d'amplitude relativement faible, savoir inférieures à 0,5 mm, et de fréquence relativement élevée, savoir supérieure à 20 Hz.

A cet effet, les manchons du genre en question sont essentiellement caractérisés selon l'invention en ce que les portées destinées à venir en butée radiale l'une contre l'autre lors des fortes sollicitations exercées radialement entre les deux armatures sont disposées axialement à l'extérieur des poches, en ce que l'une desdites portées extérieures est montée à l'intérieur de l'armature externe et constitue un bourrelet axialement saillant compris par le corps en élastomère qui relie entre elles les deux armatures et en ce que l'autre portée extérieure est une portion cylindrique rigide radialement agrandie de l'armature intérieure.

Dans des modes de réalisation avantageux, on a recours en outre à l'une et/ou à l'autre des dispositions suivantes :
- l'armature intérieure est un tube rigide et le passage étranglé comprend un tronçon annulaire délimité extérieurement par une portion de ce tube et pour le restant par une bague de révolution logée jointivement dans cette portion et présentant en demi-section axiale la forme d'un U ouvert radialement vers l'extérieur, l'étanchéité entre la bague et le tube étant assurée par un fourreau en élastomère qui tapisse l'intérieur du tube et dans lequel est noyée la bague, ledit tronçon annulaire du passage étranglé communiquant avec les poches à travers des lumières perforées dans le tube,
- le tube selon l'alinéa précédent est perforé par d'autres lumières permettant de faire venir de moulage en un seul bloc le fourreau en élastomère et le corps en élastomère qui relie entre elles les deux armatures,
- une chambre à air délimitée par une paroi flexible et étanche ou un corps déformable analogue est prévu dans l'une au moins des poches,
- chaque corps déformable s'étend le long de la face intérieure de l'armature externe,
- dans un manchon comprenant plusieurs poches garnies chacune d'une chambre à air, une communication permanente est établie entre les différentes chambres à air,
- le corps déformable ci-dessus est constitué par un coussin en matière alvéolaire à cellules fermées.

L'invention comprend, mises à part ces dispositions principales, certaines autres dispositions qui s'utilisent de préférence en même temps et dont il sera plus explicitement question ci-après.

Dans ce qui suit, l'on va décrire plusieurs modes de réalisation préférés de l'invention en se référant aux dessins ci-annexés d'une manière bien entendu non limitative.

Les figures 1 à 3, de ces dessins, montrent un manchon antivibratoire hydraulique établi selon l'invention, respectivement en coupes axiales selon I-I et II-II, figure 3, et en coupe transversale selon III-III, figure 1.

Les figures 4 et 5 montrent une variante d'un tel manchon également conforme à l'invention respectivement en demi-coupe transversale selon IV-IV, figure 5 et en coupe axiale partielle selon V-V, figure 4.

Dans chaque cas, le manchon comprend :
- une armature métallique interne de révolution 1,
- une armature métallique externe de révolution 2 coaxiale à l'armature 1 et entourant celle-ci,
- et un corps en élastomère 3 reliant l'une à l'autre les deux armatures 1 et 2 en ménageant entre celles-ci deux poches étanches 4.

L'armature interne 1 est destinée à être solidarisée avec une broche (non représentée) qui la traverse jointivement alors que l'armature externe 2 est destinée à être solidarisée avec un palier 5, cette broche et ce palier étant solidaires respectivement de deux éléments entre lesquels on désire monter un support antivibratoire, éléments tels qu'un moteur de véhicule et que le châssis de ce véhicule.

Les deux poches 4 communiquent entre elles par un passage étranglé 6.

Ces deux poches et le passage étranglé sont remplis d'un liquide L.

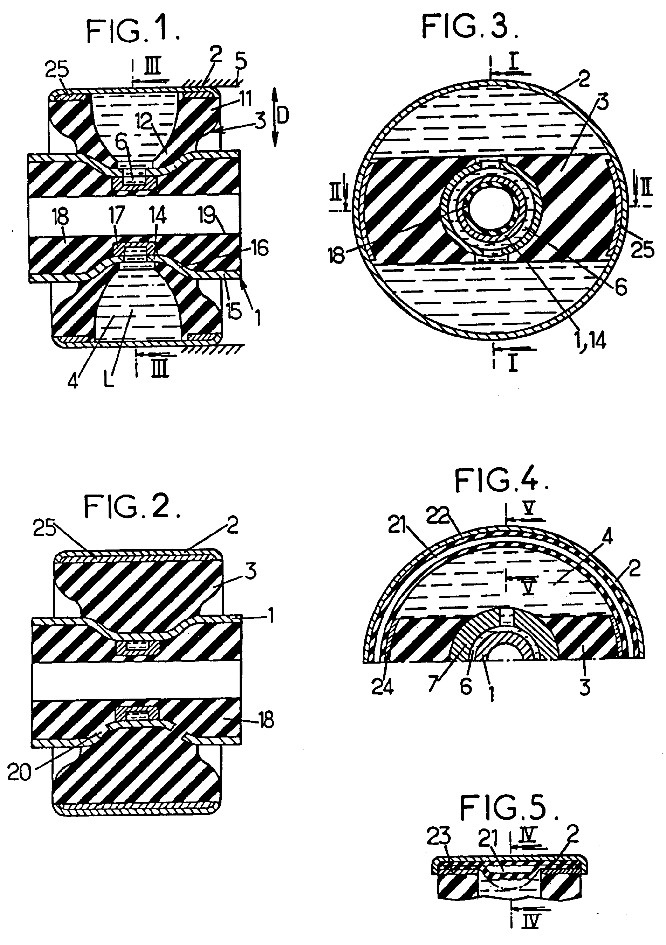

Dans le mode de réalisation des figures 1 à 3, le passage étranglé 6 comprend un tronçon annulaire raccordé à deux lumières radiales : le tronçon annulaire est délimité extérieurement par la face interne de l'armature interne 1 et pour le restant par une bague annulaire 17 logée jointivement dans cette armature et présentant en demi-section axiale la forme d'un U ouvert radialement vers l'extérieur, et les deux lumières radiales sont évidées dans ladite armature.

Le corps 3 est composé de deux anneaux épai-identiques réunis axialement entre eux par deux bras épais qui divisent le volume compris entre les deux armatures en les deux poches 4.

Pour limiter l'amplitude des déformations radiales du corps 3, on prolonge axialement les deux portions périphériques externes des anneaux 3, vers l'extérieur des poches 4, par des bourrelets 11 qui sont adhérés contre la face interne de l'armature externe 2 et qui se trouvent radialement en regard de portées rigides de l'armature intérieure 1, après montage à force de l'armature 2 dans le palier 5.

Lors des fortes déformations du manchon, dues à l'application de fortes sollicitations sur l'une des deux armatures 1 et 2 par rapport à l'autre selon la direction diamétrale D, qui est verticale sur les dessins, l'un au moins des bourrelets 11 vient buter selon cette direction D contre la plage en regard.

Cette butée est effectuée progressivement grâce à l'élasticité du matériau constitutif des bourrelets.

On obtient ainsi une limitation souple et efficace des déformations du manchon.

En outre, vu la localisation des bourrelets 11 à l'extérieur des poches 4, la butée de ces bourrelets contre les plages en regard ne s'accompagne d'aucun bouchage du passage étranglé 6, ni d'aucune création de passage étranglé supplémentaire, ce qui permet au manchon de jouer exactement en toutes circonstances le rôle amortisseur pour lequel il a été conçu.

On rappelle que, d'une façon connue en soi, ce rôle amortisseur est rempli par refoulement alternatif du liquide L d'une poche 4 dans l'autre à travers le passage étranglé 6 au rythme des oscillations à amortir, lesquelles sont appliquées au support selon la direction D, laquelle est la direction de l'axe commun aux deux lumières terminant le passage étranglé 6.

Les dimensions, dudit passage 6, et en particulier le rapport entre sa longueur et sa section, sont déterminées à l'avance d'une façon telle que le refoulement alternatif mentionné engendre dans le liquide L un phénomène de résonance susceptible de s'opposer efficacement à la transmission, d'une armature à l'autre, d'oscillations d'amplitude et fréquence bien déterminées.

Dans le mode de réalisation des figures 1 à 3, les zones 12 de petit diamètre des anneaux 3 sont non seulement amincies, mais aussi rapprochées axialement l'une de l'autre.

L'armature interne 1 est constituée de son côté par un tube en forme de diabolo présentant un col central rétréci 14 et des extrémités axiales 15 cylindriques de plus grand diamètre disposées radialement en regard des bourrelets 11.

Les zones amincies et rapprochées 12 sont adhérées sur la face externe de la zone annulaire évasée 16, du tube 1, qui raccorde le col 14 aux extrémités épanouies 15.

Cette conformation est avantageuse en ce qu'elle permet aux zones élastiques 12 de travailler en flexion, et non seulement en compression lors de leurs déformations.

Dans ce cas, la portion, du tube 1, où est localisé le passage étranglé 6 est son col 14.

L'étanchéité entre la bague 17 et le col 14 est assurée par un fourreau 18 en élastomère tapissant intérieurement le tube 1.

Ce fourreau est évidé axialement par un canal cylindrique 19 servant de logement à la broche de montage mentionnée ci-dessus.

Pour assurer une bonne adhérence sur le tube 1 de l'ensemble des pièces en élastomère 11, 12 et 18, on les fait venir de moulage en une seule pièce et l'on prévoit, évidées dans la zone évasée 16 du tube 1, des lumières de communication 20 qui sont elles-mêmes remplies d'élastomère lors dudit moulage.

Avec cette construction, on peut facilement donner à la dimension axiale hors tout de la zone périphérique du manchon, y compris ses butées extérieures, une valeur relativement petite, ce qui constitue un avantage important de ladite construction.

C'est en effet au tube intérieur 1 que l'on doit donner la plus grande longueur axiale, vu que la mise en place du manchon entre les éléments à réunir par celui-ci fait intervenir en général un montage de ce tube intérieur entre les deux bras d'une chape.

On peut noter à ce sujet que le diamètre agrandi des extrémités 15 du tube permet d'offrir une relativement grande surface d'appui pour le manchon ainsi pris en chape.

Dans ce dernier mode de réalisation, comme dans les précédents, les déformations radiales de grande amplitude du manchon selon la direction D font intervenir une application progressive des bourrelets 11 contre les tronçons terminaux 15 en regard du tube 1.

Ces déformations sont ainsi limitées avec souplesse et efficacité.

Dans des modes de réalisation perfectionnés, on rend les manchons du genre décrit ci-dessus capables non seulement d'amortir des oscillations de relativement grande amplitude et relativement basse fréquence par création d'un phénomène de résonance dans le liquide qui circule dans le passage étranglé, mais également de filtrer certaines vibrations d'amplitude plus petite, savoir inférieure à 0,5 mm et de fréquence plus élevée, savoir supérieure à 20 Hz, en évitant la mise en résonance du liquide dans le passage étranglé.

A cet effet, on dispose dans l'une au moins des poches 4 une chambre à air ou analogue 21 (voir figures 4 et 5) délimitée par une paroi mince étanche et flexible 22.

L'introduction d'une telle chambre 21 dans les poches 4 ci-dessus est rendue possible par le fait que les butées de limitation des déformations radiales ne sont plus contenues à l'intérieur de ces poches, mais sont ici disposées à l'extérieur desdites poches.

La chambre 21 est par exemple constituée par un boyau tubulaire en caoutchouc contenant de l'air ou un autre gaz de préférence légèrement comprimé, décomposé transversalement en une portion centrale librement déformable et en deux portions latérales pincées respectivement entre, d'une part, l'armature extérieure 2 et, d'autre part, deux viroles métalliques 23 entourant les deux parois annulaires constitutives du corps 3.

La chambre 21 peut être prévue dans une seule des poches 4.

Dans le mode de réalisation illustré à titre d'exemple sur les figures 4 à 5, deux chambres 21 sont prévues dans respectivement les deux poches 4, ces deux chambres étant constituées par deux tronçons d'un même boyau annulaire continu communiquant entre eux en permanence, ce pour quoi un passage est réservé pour la portion transversale centrale du boyau entre les bras radiaux constitutifs du corps 3 et l'armature externe 2 : à cet effet les deux viroles 23 peuvent être réunies axialement entre elles par deux pontets décalés 24.

Cette dernière formule présente l'avantage que tout gonflement de l'une des deux chambres 21 se traduit automatiquement par un dégonflement de l'autre chambre et inversement.

On comprend facilement que les déformations de relativement faible amplitude et de fréquence relativement élevée appliquées selon la direction D sur l'une des deux armatures 1 et 2 ne se traduisent pas par un refoulement de liquide dans le passage étranglé 6 mais par une déformation de chaque chambre 21, ce qui permet d'éviter la transmission de ces vibrations à l'autre armature.

La chambre à air ou à gaz 21 ci-dessus décrite peut être remplacée par tout corps déformable analogue tel qu'un coussin en matériau alvéolaire à cellules fermées.

Dans le mode de réalisation des figures 4 et 5, le passage étranglé 6 comprend, d'une part, un tronçon annulaire délimité intérieurement par une gorge annulaire évidée dans la face externe du tube interne 1 et extérieurement par une bague 7 entourant jointivement ce tube et, d'autre part, deux trous radiaux évidés dans ladite bague 7 et faisant communiquer le tronçon annulaire avec les deux poches 4.

Sur les figures 1 à 3, on voit en 25 un tronçon de tube rigide encageant le corps en élastomère 3 et évidé radialement en regard des poches 4 pour permettre le démoulage radial de noyaux destinés à former ces poches dans ledit corps. C'est sur ce tube 25 qu'est emmanchée à force l'armature externe 2, alors que le tout est par exemple immergé dans un bain de liquide L, ce qui assure le remplissage du manchon en ce liquide.

L'étanchéité entre ce tube 25 et l'armature 2 est assurée par des nervures ou bordures en élastomère formées dans le corps 3 : à cet effet on exerce un rétreint radial sur les éléments rigides constitutifs du tube 25, éléments prévus plus étroits que les plages dudit corps 3 qu'ils encagent, ce qui fait apparaître lesdites nervures par débordement radial le long de ces éléments.

En suite de quoi, et quel que soit le mode de réalisation adopté, on dispose finalement de manchons antivibratoires hydrauliques dont la constitution, le fonctionnement et les avantages résultent suffisamment de ce qui précède.

## Revendications

1. Manchon de support comprenant deux armatures rigides tubulaires (1,2) s'entourant mutuellement, réunies entre elles par un corps en élastomère (3) adhéré sur elles et conformé de façon à former au moins deux poches étanches (4), ces poches communiquant entre elles par un passage étranglé (6) et étant remplies de liquide (L) ainsi que ledit passage, et des portées étant prévues respectivement sur les deux armatures pour venir en butée radiale l'une contre l'autre selon la direction (D) de travail hydraulique du support lors de l'exercice de fortes sollicitations radiales entre ces deux armatures selon cette direction, caractérisé en ce que ces portées (11,15) sont disposées axialement à l'extérieur des poches (4), en ce que l'une desdites portées extérieures est montée à l'intérieur de l'armature externe (2) et constitue un bourrelet (11) axialement saillant compris par le corps en élastomère (3) qui relie entre elles les deux armatures et en ce que l'autre portée extérieure est une portion cylindrique (8,15) rigide radialement agrandie de l'armature interne (11).

2. Manchon de support selon la revendication 1, caractérisé en ce que l'armature interne est un tube rigide (1) et en ce que le passage étranglé (6) comprend un tronçon annulaire délimité extérieurement par une portion (14) de ce tube et pour le restant par une bague de révolution (17) logée jointivement dans cette portion et présentant en demi-section axiale la forme d'un U ouvert radialement vers l'extérieur, l'étanchéité entre la bague et le tube étant assurée par un fourreau en élastomère (18) qui tapisse l'intérieur du tube et dans lequel est noyée la bague, ledit tronçon annulaire du passage étranglé communiquant avec les poches à travers des lumières perforées dans le tube.

3. Manchon de support selon la revendication 2, caractérisé en ce que le tube rigide (1) est perforé par d'autres lumières (20) permettant de faire venir de moulage en un seul bloc le fourreau en élastomère (18) et le corps en élastomère (3) qui relie entre elles les deux armatures.

4. Manchon de support selon l'une quelconque des précédentes revendications, caractérisé en ce qu'une chambre à air (21) délimitée par une paroi flexible et étanche (22) ou un corps déformable analogue est prévu dans l'une au moins des poches (4).

5. Manchon de support selon la revendication 4, caractérisé en ce que chaque corps déformable s'étend le long de la face interne de l'armature extérieure (2).

6. Manchon de support selon l'une quelconque des revendications 4 et 5, comprenant plusieurs poches (4) garnies chacune d'une chambre à air (21), caractérisé en ce qu'une communication permanente est établie entre les différentes chambres à air.

7. Manchon de support selon l'une quelconque des revendications 4 et 5, caractérisé en ce que le corps déformable est constitué par un coussin en matériau alvéolaire à cellules fermées.

## Patentansprüche

1. Lagerelement, das aus zwei starren rohrförmigen Werkstücken (1, 2), die umeinander angeordnet und miteinander durch einen an ihnen angebrachten Körper (3) aus elastomerem Material verbunden sind, der so ausgebildet ist, daß er wenigstens zwei dichte Taschen (4) bildet, die miteinander über einen verengten Durchlaß (6) in Verbindung stehen und ebenso wie der Durchlaß mit Flüssigkeit (L) gefüllt sind, und Anlageflächen besteht, die an den beiden Werkstücken vorgesehen sind und radial entsprechend der Richtung (D) der hydraulischen Belastung des Lagers in Anschlag kommen, wenn zwischen den beiden Werkstücken in dieser Richtung starke Beanspruchungen in radialer Richtung auftreten, dadurch gekennzeichnet, daß die Anlage- oder Anschlagfläche (11, 15) axial außerhalb der Taschen (4) angeordnet sind, daß eine der äußeren Anlageflächen innerhalb des äußeren Werkstückes (2) angebracht und als axial vorstehende Wulst (11) ausgebildet ist, die durch den elastomeren Körper (3) umfaßt wird, der die beiden Werkstücke miteinander verbindet und daß die andere äußere Anlagefläche ein in radialer Richtung vergrößerter starrer zylindrischer Abschnitt (8,15) des inneren Werkstückes (1) ist.

2. Lagerelement nach Anspruch 1, dadurch gekennzeichnet, daß das innere rohrförmige Werkstück aus einem starren Rohr (1) besteht und daß der verengte Durchlaß (6) einen Ringabschnitt enthält, der nach außen zu von einem Abschnitt (14) des Rohres (1) und im übrigen von einem zylindrischen Ring (17) begrenzt wird, der dicht an dem Abschnitt (14) anliegt und dessen axialer Querschnitt die Form eines U hat, das in radialer Richtung nach außen offen ist, wobei die Abdichtung zwischen dem Ring (17) und dem Rohr (1) durch ein Futter (18) aus elastomerem Material sichergestellt wird, mit dem der Innenraum des Rohres (1) ausgefüttert und in das der Ring eingebettet ist und wobei der Ringabschnitt des verengten Durchlasses mit den Taschen über Öffnungen in Verbindung steht, die in das Rohr gebohrt sind.

3. Lagerelement nach Anspruch 2, dadurch gekennzeichnet, daß das starre Rohr (1) mit weiteren Bohrungen (20) versehen ist, die es ermöglichen, das Futter (18) und den Körper (3), die aus elastomerem Material bestehen und die beiden rohrförmigen Werkstücke miteinander verbinden, aus einem Stück durch Formguß herzustellen.

4. Lagerelement nach einem der vorhergehenden Ansprüche, dadurch gekennzeichnet, daß in wenigstens einer der Taschen (4) eine Luftkammer (21) vorgesehen ist, die durch eine biegsame und dichte Wandung (22) oder einen analogen deformierbaren Körper begrenzt wird.

5. Lagerelement nach Anspruch 4, dadurch gekennzeichnet, daß sich der deformierbare Körper längs der inneren Oberfläche des äußeren rohrförmigen Werkstückes (2) erstreckt.

6. Lagerelement nach einem der Ansprüche 4 und 5, das mehrere mit jeweils einer Luftkammer (21) versehene Taschen (4) enthält, dadurch gekennzeichnet, daß zwischen den verschiedenen Luftkammern eine dauernde Verbindung besteht.

7. Lagerelement nach einem der Ansprüche 4 und 5, dadurch gekennzeichnet, daß der deformierbare Körper aus einem Kissen aus alveolärem Material mit geschlossenen Zellen besteht.

## Claims

1. Support sleeve comprising two mutually surrounding tubular rigid armatures (1,2), joined to one another by an elastomeric body (3) adhered to them and shaped so as to form at least two fluid-tight pockets (4), said pockets communicating with one another through a throttled passage (6) and being filled with liquid (L) as well as said passage, and bearing surfaces being provided respectively on the two armatures to come into radial abutment against one another in the direction (D) of hydraulic working of the support during the exertion of strong radial forces between these two armatures in this direction, characterized in that these bearing surfaces (11,15) are positioned axially outside the pockets (4), in that one of said outer bearing surfaces is mounted inside the outer armature (2) and constitutes an axially projecting beading (11) comprised by the body of elastomer (3) which joins the two armatures to one another and in that the other outer bearing surface is a rigid cylindrical, radially enlarged part (8,15) of the inner armature (1).

2. Support sleeve according to claim 1, characterized in that the inner armature is a rigid tube (1) and in that the throttled passage (6) comprises an annular section bounded externally by a portion (14) of this tube and for the rest by a ring of revolution (17) housed adjacently in this portion and having in axial half-section the shape of a U open radially outwards, the fluidtightness between the ring and the tube being ensured by a bushing of elastomer (18) which lines the inside of the tube and in which the ring is buried, said annular section of the throttled passage communicating with the pockets through ports perforated in the tube.

3. Support sleeve according to claim 2, characterized in that the rigid tube (1) is perforated by other ports (20) enabling the molding in a single block of the bushing of elastomer (18) and the body of elastomer (3) which joins the two armatures to one another.

4. Support sleeve according to any one of the preceding claims, characterized in that an air chamber (21) bounded by a flexible and fluid-tight wall (22) or a similar deformable body is provided in one at least of the pockets (4).

5. Support sleeve according to claim 4, characterized in that each deformable body extends along the inner surface of the outer armature (2).

6. Support sleeve according to any one of claims 4 and 5, comprising several pockets (4) each lined with an air chamber (21), characterized in that a permanent communication is established between the different air chambers.

7. Support sleeve according to any one of claims 4 and 5, characterized in that the deformable body is constituted by a cushion of alveolar material with closed cells.
